# EUROPEAN PATENT APPLICATION

(11) **EP 2 701 426 A2**
(43) Date of publication of application: **26.02.2014**
(21) Application number: 11768462.1
(22) Date of filing: 16.05.2011
(51) Int. Cl.: H04W 28/00, H04W 48/06, H04W 52/02

(54) **METHOD, SYSTEM AND DEVICE OF ENERGY SAVING FOR BASE STATIONS**

(71) Applicant: Huawei Technologies Co., Ltd., Shenzhen, Guangdong 518129 (CN)
(72) Inventor: XU, Xiuqiang, Guangdong 518129 (CN); CHEN, Yan, Guangdong 518129 (CN); XU, Shugong, Guangdong 518129 (CN)
(74) Representative: Körber, Martin Hans
(86) International application number: PCT/CN2011/074098
(87) International publication number: WO 2011/127851

(57) **Abstract**

An energy saving method, system and device for a base station are applicable to the field of communications technologies. The energy saving method for a base station includes: sending, by a coverage station or an OAM equipment, a second activation request to a capacity station in a second energy saving state under the coverage of the coverage station if it is detected that the load of the coverage station is higher than a preset value, so as to activate the capacity station to enter a first energy saving state. The energy saving system for a base station includes: a coverage station and at least one capacity station under the coverage of the coverage station. Another energy saving system for a base station includes: a coverage station, at least one capacity station under the coverage of the coverage station and an operations, administration and maintenance OAM equipment. Therefore, the energy saving for a base station is achieved.

## Description

### FIELD OF THE INVENTION

The present invention relates to the field of communications technologies, and in particular, to an energy saving method, system and device for a base station.

### BACKGROUND OF THE INVENTION

Nowadays the wireless communication service has already developed from a low-speed speech service to a high-speed multimedia data service. To meet the daily increasing demands for high capacity and high data rates, apart from the application of radio access technologies with higher capacity and transmission rates, operators usually deploy an inter-frequency point network of a different standard or the same standard or deploy a capacity station at a hotspot area to perform service update and capacity enhancement on the basis of providing basic network coverage. For ease of description, a base station that provides basic network coverage is generally referred to as a coverage station in the following, and a base station that performs service update or capacity enhancement and is completely inside the coverage of the coverage station is generally referred to as a capacity station (Hotspot Cell) in the following.

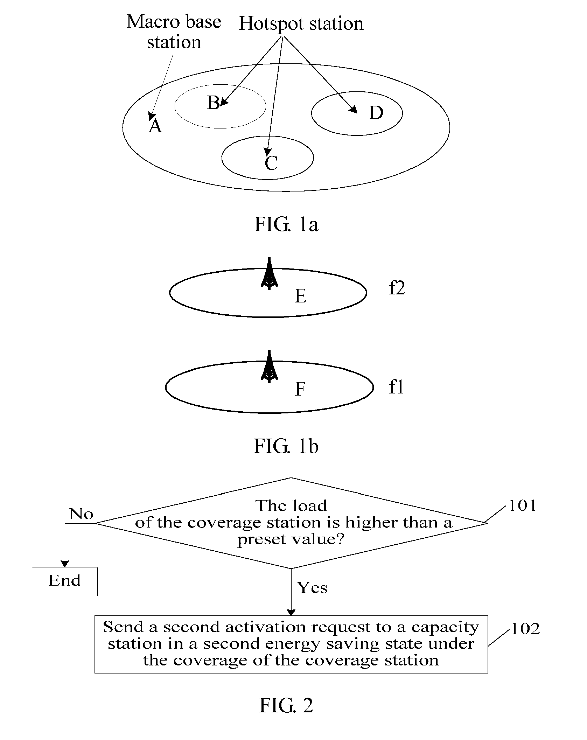

As shown in FIG. 1a, hotspot stations B, C and D for capacity expansion are deployed in a hotspot area under the coverage of a macro base station A, so that the macro base station A is a coverage station, whereas the hotspot stations B, C and D are capacity stations. As shown in FIG. 1b, a base station F at a frequency f1 provides basic network coverage for an area, and a base station E at a different frequency point f2 of a different standard or the same standard shares the station address with the base station F to perform capacity enhancement, so that the base station F is a coverage station, whereas the base station E is a capacity station.

A coverage station and a large number of capacity stations are deployed in order to meet the demands for high capacity and high data rates, which increases energy consumption, so energy saving for wireless networks is an urgent issue.

An existing energy saving method for a base station includes: if the load of a base station is lower than a threshold, instructing, by a management system, the base station to execute a first predetermined operation, namely, to enter a complete sleep state or to be turned off; if the load of a neighbor cell having the same coverage as the base station is higher than a threshold, instructing, by the management system, the base station to execute a second predetermined operation, namely, to be automatically waked up or turned on. However, in a practical network, due to uneven distribution of users, a base station, after being completely waked up or turned on, might fail to effectively absorb the load of a neighbor cell having the same coverage, resulting in waste of resources and power when the base station is completely waked up or completely turned on.

Another energy saving method for a base station may include: when a coverage station detects that the load is high, activating all capacity stations in a sleep state under the coverage of the coverage station; if some activated capacity stations fail to effectively absorb the load of the coverage station, when the condition of entering a sleep state is met again, automatically entering, by these capacity stations, a sleep state for energy saving.

However, during the process in which a capacity station enters a sleep state and the capacity station is activated and then enters a sleep state again, the waste of resources and power occurs on the complete activation of these capacity stations. At the same time, users in an idle state under the coverage of the capacity station may move between the capacity station and the coverage station. With the movement of users, especially when the coverage station and the capacity station adopt different standards, a location update process might occur frequently.

### SUMMARY OF THE INVENTION

Embodiments of the present invention provide an energy saving method, system and device for a base station, so as to achieve energy saving for a base station.

An embodiment of the present invention provides an energy saving method for a base station, which includes:
detecting whether the load of a coverage station is higher than a preset value; and
if the load of the coverage station is higher than the preset value, sending a second activation request to a capacity station in a second energy saving state under the coverage of the coverage station, where the second activation request is used for requesting the capacity station to enter a first energy saving state from the second energy saving state; where
in the first energy saving state, the capacity station only bears a user equipment in a connected state and sends system information of the user equipment in a connected state; and in the second energy saving state, the capacity station rejects to bear a user equipment in any state.

An embodiment of the present invention provides another energy saving method for a base station, which includes:
receiving a second activation request sent by a present coverage station or an operations, administration and maintenance OAM equipment, where the second activation request is used for requesting a capacity station to enter a first energy saving state from a second energy saving state; and
entering the first energy saving state from the current second energy saving state; where
in the first energy saving state, the capacity station only bears a user equipment in a connected state and sends system information of the user equipment in a connected state; and in the second energy saving state, the capacity station rejects to bear a user equipment in any state.

An embodiment of the present invention provides a base station, which includes:
a load detection unit, configured to detect whether the load of a coverage station is higher than a preset value;
an activation sending unit, configured to, when the load detection unit detects that the load of the coverage station is higher than the preset value, send a second activation request to a capacity station in a second energy saving state under the coverage of the coverage station, where the second activation request is used for requesting the capacity station to enter a first energy saving state from the second energy saving state; where
in the first energy saving state, the capacity station only bears a user equipment in a connected state and sends system information of the user equipment in a connected state; and in the second energy saving state, the capacity station does not bear a user equipment in any state.

An embodiment of the present invention further provides an operations, administration and maintenance OAM equipment, which includes:
a coverage station load detection unit, configured to detect whether the load of a coverage station is higher than a preset value; and
a state activation sending unit, configured to, when the coverage station load detection unit detects that the load of the coverage station is higher than the preset value, send a second activation request to a capacity station in a second energy saving state under the coverage of the coverage station, and notify the coverage station of state conversion information that the capacity station enters a first energy saving state from the second energy saving state, where the second activation request is used for requesting the capacity station to enter the first energy saving state from the second energy saving state; where
in the first energy saving state, the capacity station only bears a user equipment in a connected state and sends system information of the user equipment in a connected state; and in the second energy saving state, the capacity station does not bear a user equipment in any state.

An embodiment of the present invention further provides another base station, which includes:
a second activation request receiving unit, configured to receive a second activation request sent by a present coverage station or an operations, administration and maintenance OAM equipment, where the second activation request is used for requesting a capacity station to enter a first energy saving state from a second energy saving state; and
a state conversion unit, configured to, after the second activation request receiving unit receives the second activation request, enter the first energy saving state from the current second energy saving state;
in the first energy saving state, the capacity station only bears a user equipment in a connected state and sends system information of the user equipment in a connected state; and in the second energy saving state, the capacity station rejects to bear a user equipment in any state.

An embodiment of the present invention further provides an energy saving system for a base station, which includes: a coverage station and at least one capacity station under the coverage of the coverage station;
the coverage station, configured to detect whether the load of the coverage station is higher than a preset value, if yes, send a second activation request to the capacity station in a second energy saving state under the coverage of the coverage station, where the second activation request is used for requesting the capacity station to enter a first energy saving state from the second energy saving state; in the first energy saving state, the capacity station only bears a user equipment in a connected state and sends system information of the user equipment in a connected state; and in the second energy saving state, the capacity station rejects to bear a user equipment in any state; and
the capacity station, configured to receive the second activation request sent by the coverage station, and enter the first energy saving state from the current second energy saving state.

An embodiment of the present invention further provides another energy saving system for a base station, which includes: a coverage station, at least one capacity station under the coverage of the coverage station, and an operations, administration and maintenance OAM equipment;
the OAM equipment, configured to detect whether the load of the coverage station is higher than a preset value, if yes, send a second activation request to the capacity station in a second energy saving state under the coverage of the coverage station, where the second activation request is used for requesting the capacity station to enter a first energy saving state from the second energy saving state, and notify the coverage station of state conversion information that the capacity station enters the first energy saving state from the second energy saving state; where in the first energy saving state, the capacity station only bears a user equipment in a connected state and sends system information of the user equipment in a connected state; and in the second energy saving state, the capacity station rejects to bear a user equipment in any state;
the capacity station, configured to receive the second activation request sent by the OAM equipment, and enter the first energy saving state from the current second energy saving state; and
the coverage station, configured to receive the state conversion information that the capacity station enters the first energy saving state from the second energy saving state, where the state conversion information is sent by the OAM equipment.

The energy saving method for a base station in the embodiments of the present invention includes: if it is detected that the load of a coverage station is higher than a preset value, sending a second activation request to all or a part of capacity stations in a second energy saving state under the coverage of the coverage station, so as to activate the capacity stations to enter a first energy saving state. Therefore, a capacity station in the first energy saving state only bears a user equipment in a connected state, whereas a user equipment in an idle state is borne by the coverage station, so that the overhead of common signaling that needs to be sent by the capacity station is reduced, thereby achieving the object of energy saving for a capacity station.

In the embodiments of the present invention, after being activated from a second energy saving state, namely, a sleep state or an off state, a capacity station first does not bear a user equipment in an idle state, thereby avoiding the moving of a user equipment in an idle state between a coverage station and the capacity station.

### BRIEF DESCRIPTION OF THE DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and persons of ordinary skill in the art may still derive other drawings from these accompanying drawings without creative efforts.
FIG. 1a is a schematic structural view of a coverage station and a capacity station in the prior art;
FIG. 1b is a schematic structural view of another coverage station and capacity station in the prior art;
FIG. 2 is a flow chart of an energy saving method for a base station provided in an embodiment of the present invention;
FIG. 3 is a flow chart of another energy saving method for a base station provided in an embodiment of the present invention;
FIG. 4 is a flow chart of another energy saving method for a base station provided in an embodiment of the present invention;
FIG. 5 is a flow chart of another energy saving method for a base station provided in an embodiment of the present invention;
FIG. 6 is a schematic structural view of the conversion of a capacity station among three states provided in an embodiment of the present invention;
FIG. 7a is a flow chart that a capacity station enters a first energy saving state from a normal state in a specific implementation example provided in an embodiment of the present invention;
FIG. 7b is a flow chart that a capacity station enters a normal state from a first energy saving state in a specific implementation example provided in an embodiment of the present invention;
FIG. 8a is a flow chart that a capacity station enters a first energy saving state from a normal state in another specific implementation example provided in an embodiment of the present invention;
FIG. 8b is a flow chart that a capacity station enters a normal state from a first energy saving state in another specific implementation example provided in an embodiment of the present invention;
FIG. 9 is a schematic structural view of a coverage station provided in an embodiment of the present invention;
FIG. 10 is a schematic structural view of another coverage station provided in an embodiment of the present invention;
FIG. 11 is a schematic structural view of an OAM equipment provided in an embodiment of the present invention;
FIG. 12 is a schematic structural view of another OAM equipment provided in an embodiment of the present invention;
FIG. 13 is a schematic structural view of a capacity station provided in an embodiment of the present invention; and
FIG. 14 is a schematic structural view of another capacity station provided in an embodiment of the present invention.

### DETAILED DESCRIPTION OF THE EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

An embodiment of the present invention provides an energy saving method for a base station:

Applicable to the system shown in shown in FIG. 1a and 1b, the method in this embodiment is a method executed by a coverage station or an operations, administration and maintenance (Operation Administration and Maintenance, OAM) equipment, where the OAM equipment is the equipment used for managing a coverage station and a capacity station in a system, and the flow chart is shown in FIG. 2, which includes:

Step 101: Detect whether the load of a coverage station is higher than a preset value; if yes, execute step 102; and if no, end the process.

During the detection of the load of the coverage station, one or more pieces of information in the following may be detected: the number of users, which are in a connected state, of a coverage station, downlink data amount of a coverage station, an occupancy rate of air interface resources of a coverage station, and so on; however, the present invention is not limited thereto.

Step 102: Send a second activation request to a capacity station in a second energy saving state under the coverage of the coverage station, where the second activation request is used for requesting the capacity station to enter a first energy saving state from the second energy saving state.

It can be understood that a coverage station or an OAM equipment may send the second activation request to all capacity stations under the coverage station to enable the capacity station to enter the first energy saving state; or send the second activation request to a part of capacity stations under the coverage station, for example, the part of capacity stations may be capacity stations in an area where the distribution of user equipments and service amount is dense under the coverage station, so as to activate the capacity stations according to the distribution of user equipments.

In the first energy saving state, a capacity station may only bear a user equipment in a connected state, and send system information required for the user equipment in a connected state but does not send system information required for a user equipment in a disconnected state. The capacity station may further support handover where a source base station is the coverage station of the capacity station, but reject handover where a source base station is not the coverage station of the capacity station, and reject cell selection and cell reselection where the capacity station is a target; and the capacity station only sends a paging message used for notifying update of system information, but does not send a paging message used for paging a user equipment.

In a second energy saving state, namely, a sleep state or an off state, a capacity station rejects to bear a user equipment in any state, but the capacity station in the second energy saving state keeps an interface with a coverage station or an OAM equipment.

It should be noted that, if steps 101 and 102 are executed by an OAM equipment, that is, an OAM equipment detects load and sends the second activation request, the OAM equipment further needs to notify the coverage station of the capacity station of state conversion information that the capacity station enters the first energy saving state from the second energy saving state, so that the coverage station may learn a state of each capacity station under the coverage, so as to take the state of each capacity station into consideration during handover and cell reselection.

When the capacity station under the coverage station is in the first energy saving state, if a user equipment in a connected state hands over to the capacity station being a target base station, the coverage station or OAM equipment may hand over a packet switching (Packet Switching, PS) service and/or a circuit switching (Circuit Switching, CS) service under the coverage station to the capacity station.

If a user equipment in an idle state wants to access a capacity station in the first energy saving state, a connection first needs to be established between the coverage station of the capacity station and the user equipment in an idle state, so that the user equipment in an idle state becomes a user equipment in a connected state; and through the handover between the coverage station and the capacity station, the user equipment is connected to the capacity station in the first energy saving state.

It can be seen that the energy saving method for a base station in the embodiment of the present invention includes: if it is detected that the load of a coverage station is higher than a preset value, sending a second activation request to all or a part of capacity stations in the second energy saving state under the coverage of the coverage station, so as to activate the capacity stations to enter the first energy saving state. Therefore, a capacity station in a first energy saving state only bears a user equipment in a connected state, whereas a user equipment in an idle state is borne by the coverage station, so that the overhead of common signaling that needs to be sent by the capacity station is reduced, thereby achieving the object of energy saving for a capacity station.

In the embodiment of the present invention, after being activated from the second energy saving state, namely, a sleep state or an off state, a capacity station first does not bear a user equipment in an idle state. In this way, before it is completely determined whether the capacity station needs to return to a normal state, moving of a user equipment in an idle state between a coverage station and the capacity station is avoided.

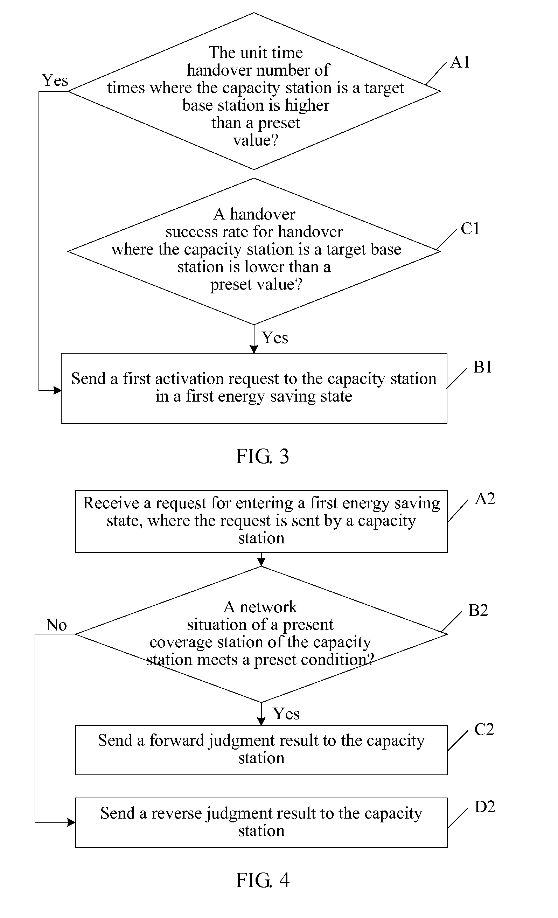

Referring to FIG. 3, in a specific embodiment, a coverage station or an OAM equipment may further achieve energy saving for a base station through the following steps, and in this embodiment, a capacity station enters a normal state from a first energy saving state:

A1 : Detect whether the unit time handover number of times when a user equipment in a connected state under the coverage of the coverage station takes the capacity station in the first energy saving state as the target base station is higher than a preset value; if yes, execute step B1; and if no, end the process.

B1 : Send a first activation request to the capacity station in the first energy saving state.

Here, the first activation request is used for requesting the capacity station to enter the normal state from the first energy saving state, the capacity station in the normal state may bear a user equipment in any state, and cell selection or cell reselection where the capacity station is a target base station is allowed.

C1: The coverage station or the OAM equipment may further detect whether a handover success rate for handover where the capacity station in the first energy saving state is a target base station is lower than a preset value; if yes, execute step B1; and if no, end the process.

It should be noted that, if steps A1 to C1 are executed by the coverage station, because in the first energy saving state, the capacity station rejects to bear a user equipment in an idle state, after entering the normal state from the first energy saving state, the capacity station may allow to access a user equipment in an idle state. The coverage station may further update a cell reselection parameter of the capacity station in a system message of the coverage station, so that an idle user equipment under the coverage of the coverage station is allowed to be reselected to the capacity station.

If steps A1 to C1 are executed by an OAM equipment, that is, an OAM equipment detects the unit time handover number of times or a handover success rate, and after sending the first activation request, the OAM equipment further needs to notify the coverage station of state conversion information that the capacity station enters the normal state from the first energy saving state, so that the coverage station may learn a state of each capacity station under the coverage, so as to take the state of each capacity station into consideration during handover and cell reselection.

After receiving the state conversion information that the capacity station enters the normal state from the first energy saving state, the coverage station may update the cell reselection parameter of the capacity station in a system message of the coverage station, so that an idle user equipment under the coverage of the coverage station is allowed to be reselected to the capacity station, which facilitates operations such as cell reselection for a user equipment under the coverage of the coverage station; however, after receiving the state conversion information, the coverage station may also not perform the operation of updating a system message.

Referring to FIG. 4, in a specific embodiment, a coverage station or an OAM equipment may further achieve energy saving for a base station through the following steps, and in this embodiment, the coverage station or the OAM equipment decides that a capacity station enters a first energy saving state from a normal state:

A2: Receive a request for entering the first energy saving state from the normal state, where the request is sent by the capacity station.

It may be understood that when the capacity station is in the normal state, if the capacity station detects that the load of the capacity station is lower than a preset value, the capacity station sends a request for entering the first energy saving state to a present coverage station of the capacity station or an OAM equipment.

B2: Determine whether a network situation of the present coverage station of the capacity station meets a preset condition; if yes, execute step C2; and if no, execute step D2.

The preset condition here includes, but is not limited to, at least one piece of information in the following: the current load of a coverage station is lower than a preset value, load statistical information of the coverage station indicates that the load of the coverage station is lower than a preset value within subsequent preset time, and load statistical information of a capacity station indicates that the load of the capacity station is lower than a preset value within subsequent preset time, and the like.

C2: Send a forward judgment result to the capacity station to allow the capacity station to enter the first energy saving state from the normal state.

D2: Send a reverse judgment result to the capacity station to prevent the capacity station from entering the first energy saving state from the normal state.

It should be noted that, if steps A2 to D2 are executed by a coverage station, the coverage station may further update a cell reselection parameter of the capacity station in a system message of the coverage station, so that an idle user equipment under the coverage of the coverage station is prevented from being reselected to the capacity station, which facilitates operations such as cell reselection for a user equipment under the coverage of the coverage station.

If steps A2 to D2 are executed by an OAM equipment, that is, an OAM equipment receives a request about the first energy saving state and sends a judgment result, in the case of sending a forward judgment result, the OAM equipment further needs to notify the coverage station of the state conversion information that the capacity station enters the first energy saving state from the normal state, so that the coverage station may learn a state of each capacity station under the coverage, so as to take the state of each capacity station into consideration during handover and cell reselection.

After receiving the state conversion information that the capacity station enters the first energy saving state from the normal state, a coverage station may update a cell reselection parameter of the capacity station in a system message of the coverage station, so that an idle user equipment under the coverage of the coverage station is prevented from being reselected to the capacity station; however, after receiving the state conversion information, the coverage station may also not perform the foregoing operation of updating a system message.

In other specific embodiments, a capacity station may decide whether to enter a first energy saving state from a normal state, that is, when detecting that the load of the capacity station is lower than a preset value, the capacity station decides to enter the first energy saving state, and send state conversion information of entering the first energy saving state from the normal state to notify the present coverage station of the capacity station; therefore, when receiving the state conversion information, the coverage station may update the cell reselection parameter of the capacity station in the system message of the coverage station, so that an idle user equipment under the coverage of the coverage station is prevented from being reselected to the capacity station.

When detecting that there is no user equipment in a connected state under the capacity station within preset time, the capacity station decides to enter a second energy saving state, that is, a sleep state or an off state, from the first energy saving state and sends state conversion information that the capacity station enters the second energy saving state from the first energy saving state to directly notify the present coverage station of the capacity station, or notify the present coverage station of the capacity station through an OAM equipment.

An embodiment of the present invention provides another energy saving method for a base station:

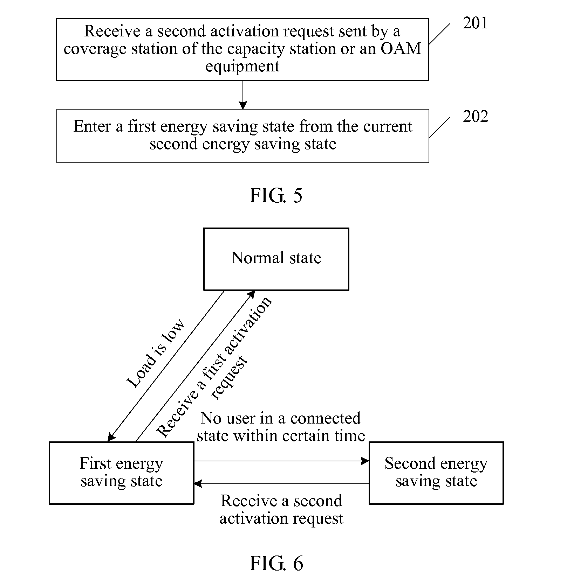

Applicable to the system shown in FIGs. 1a and 1b, the method of this embodiment is a method executed by a capacity station, and a flow chart is shown in FIG. 5, which includes:

Step 201: Receive a second activation request sent by a present coverage station of the capacity station or an OAM equipment, where the second activation request is used for requesting the capacity station to enter a first energy saving state from a second energy saving state.

It may be understood that when detecting that the load of the coverage station is higher than a preset value, the coverage station or OAM equipment needs to activate all or a part of capacity stations in the second energy saving state under the coverage of the coverage station, and sends the second activation request to these capacity stations.

Step 202: Enter the first energy saving state from the current second energy saving state.

In the first energy saving state, the capacity station only bears a user equipment in a connected state, and sends system information required for a user equipment in a connected state, but does not send system information required for a user equipment in a disconnected state. The capacity station may further support handover where the source base station is the present coverage station of the capacity station, but reject handover where the source base station is not the present coverage station of the capacity station, and reject cell selection and cell reselection where the capacity station is a target; and the capacity station only sends a paging message used for notifying update of system information, but does not send a paging message used for paging a user equipment.

In the second energy saving state, namely, a sleep state or an off state, a capacity station rejects to bear a user equipment in any state, but the capacity station in the second energy saving state keeps an interface with a coverage station or an OAM equipment.

It can be seen that the energy saving method for a base station in the embodiment of the present invention includes: when receiving a second activation request sent by a coverage station or an OAM equipment, a capacity station enters the first energy saving state from the current second energy saving state. Therefore, the capacity station in the first energy saving state only bears a user equipment in a connected state, whereas a user equipment in an idle state is borne by the coverage station, so that the overhead of common signaling that needs to be sent by the capacity station is reduced, thereby achieving the object of energy saving for the capacity station.

In the embodiment of the present invention, after being activated from the first energy saving state, that is, the sleep or off state, the capacity station first does not bear a user equipment in an idle state. In this way, before it is completely determined whether the capacity station needs to return to a normal state, the moving of a user equipment in an idle state between a coverage station and the capacity station is avoided.

In a specific embodiment, when the capacity station is in a first energy saving state:

When detecting that the unit time handover number of times when a user equipment in a connected state under the coverage of a coverage station takes the capacity station in the first energy saving state as a target base station is higher than a preset value, or detecting that a handover success rate for handover where the capacity station in the first energy saving state is a target base station is lower than a preset value, a coverage station or an OAM equipment sends a first activation request to the capacity station, where the first activation request is used for requesting the capacity station to enter a normal state from the first energy saving state; and after receiving the first activation request, the capacity station enters the normal state from the current first energy saving state.

It may be understood that, the capacity station in the normal state may bear a user equipment in any state, and operations such as cell selection or cell reselection where the capacity station is a target base station are also allowed.

Specifically, during the detection of the load of the capacity station, the capacity station may detect one or more pieces of information in the following: the number of users, which are in a connected state, of a capacity station, downlink data amount of a capacity station, an occupancy rate of air interface resources of a capacity station; however, the present invention is not limited thereto.

When entering the normal state from the first energy saving state, the capacity station may update a parameter of cell access in a system message of the capacity station, so that a user equipment in an idle state under the coverage of the capacity station resides in the capacity station, and the user equipment under the coverage of the capacity station is allowed to perform cell selection and cell reselection where the capacity station is a target base station.

In another specific embodiment, when a capacity station is in the normal state:

The capacity station may decide whether to enter the first energy saving state, specifically: the capacity station detects whether the load of the capacity station is lower than a preset value, if yes, it enters the first energy saving state from a current normal state, and notifies the present coverage station of the capacity station of conversion information that the capacity station enters the first energy saving state from the normal state; and if no, the capacity station keeps in the normal state.

Specifically, when the capacity station enters the first energy saving state from the normal state, a user equipment in an idle state under the coverage of the capacity station is migrated, and a parameter of cell access in the system message of the capacity station is updated, so that a user equipment under the coverage of the capacity station is prevented from performing cell selection and cell reselection where the capacity station is a target base station.

In another specific embodiment, when a capacity station is in a normal state:

A present coverage station of the capacity station or an OAM equipment may decide whether to enter a first energy saving state, specifically: a capacity station detects whether the load of the capacity station is lower than a preset value, if yes, it sends a request for entering the first energy saving state from the normal state to the coverage station or OAM equipment.

Therefore, the coverage station or OAM equipment may decide, based on steps A2 to D2, whether the capacity station enters the first energy saving state, and details are no longer described here. When receiving a forward judgment result which is fed back by the coverage station or OAM equipment according to the request for entering the first energy saving state, the capacity station enters the first energy saving state from the current normal state; and if receiving a reverse judgment result fed back by the coverage station or OAM equipment, the capacity station keeps in the normal state.

In other specific embodiments, when a capacity station is in a first energy saving state:
if the capacity station detects that the capacity station has no user equipment in a connected state within preset time, the capacity station enters a second energy saving state from the current first energy saving state, and directly notifies the coverage station of state conversion information that the capacity station enters the second energy saving state from the first energy saving state, or notifies the coverage station through the OAM equipment, so that the coverage station may learn the state of the capacity station under the coverage of the coverage station, and perform the corresponding handover and cell selection operations.

It can be seen that, referring to FIG. 6, in the embodiment of the present invention, a capacity station has three states, namely, a normal state, a first energy saving state and a second energy saving state. When the capacity station is in the normal state, when the load of the capacity station is low, namely, lower than a preset value, the capacity station enters the first energy saving state. After receiving a first activation request from a coverage station or an OAM equipment, the capacity station in the first energy saving state enters the normal state.

When the capacity station in the first energy saving state has no user equipment in a connected state within certain time, namely, within preset time, the capacity station enters a second energy saving state, namely, a sleep state or an off state, from the first energy saving state; when the capacity station is in the second energy saving state, if receiving a second activation request from a coverage station or an OAM equipment, the capacity station enters the first energy saving state.

It should be noted that, in the embodiment of the present invention, the capacity station cannot perform direct conversion between the normal state and the second energy saving state.

The energy saving method for a base station of the present invention is illustrated in the following through a specific embodiment:

Both the coverage station and capacity station in this embodiment are evolved UMTS terrestrial radio access network (Evoled UTRAN, EUTRAN) cells. The coverage station provides basic network coverage, the capacity station is under the coverage of the coverage station and is completely covered by the coverage station.

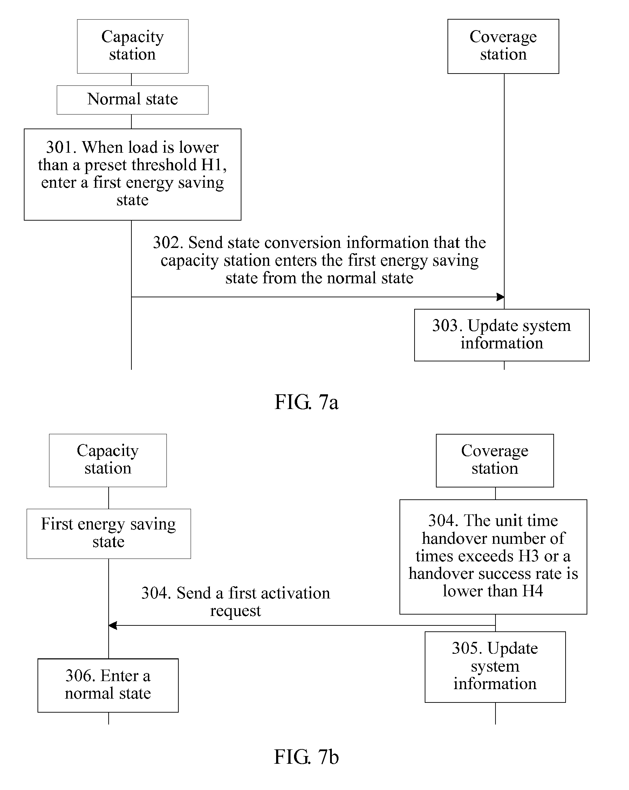

(1) Referring to FIG. 7a, a capacity station enters a first energy saving state from a normal state:

Whether the capacity station enters the first energy saving state from the normal state may be decided by the capacity station, or may be decided by a present coverage station of the capacity station or an OAM equipment.

301: When the capacity station is in the normal state, if it is detected that the load of the capacity station is lower than a preset threshold value H1, a cell bearing (cell Barred) parameter in a system information block type1 message (System Information Block Type1 message) of the capacity station may be set as "bearing barred". After time T1, the capacity station enters the first energy saving state from the normal state.

The detection of load at least includes one of the following factors: the number of users, which are in a connected state, of a capacity station, downlink data amount of a capacity station, an occupancy rate of air interface resources of a capacity station, and the like.

302: The capacity station notifies the coverage station of state conversion information of entering the first energy saving state from the normal state.

303. After the coverage station receives the notification that the capacity station enters the first energy saving state from the normal state, if the coverage station and the capacity station are intra-frequency cells, the coverage station may add a physical cell identity (phys Cell Id) of the capacity station to an intra-frequency black cell list (Intra Freq Black Cell List) of a system information block type4 message (System Information Block Type4 message) of the coverage station, and update system information.

If the coverage station and the capacity station are inter-frequency cells, the coverage station may add a physical cell identity (phys Cell Id) of the capacity station to an inter-frequency black cell list (Inter Freq Black Cell List) of a system information block type5 message (System Information Block Type5 message) of the coverage station, and update system information.

(2) A capacity station enters a second energy saving state from a first energy saving state:

When the capacity station is in the first energy saving state, if there is no user equipment in a connected state within the preset timeT2, the capacity station enters the second energy saving state from the first energy saving state and notifies the coverage station of state conversion information of entering the second energy saving state from the first energy saving state.

(3) A capacity station enters a first energy saving state from a second energy saving state:

When the capacity station is in the second energy saving state, if a present coverage station of the capacity station detects that the load of the coverage station is higher than a preset threshold H2, the coverage station sends a second activation request to all or a part of capacity stations under the coverage to request the capacity stations to enter the first energy saving state.

After receiving the second activation request sent by the coverage station, the capacity stations enter the first energy saving state from the second energy saving state.

(4) Referring to FIG. 7b, a capacity station enters a normal state from a first energy saving state:

304: When the capacity station is in the first energy saving state, if a coverage station detects that the unit time handover number of times when a user, which is in a connected state, of the coverage station takes a capacity station as a target base station exceeds a preset threshold H3, or a handover success rate for handover where the capacity station is a target base station is lower than a preset threshold H4, the coverage station sends a first activation request to the capacity station.

305: If the coverage station and the capacity station are intra-frequency cells, after the time T3 after sending the first activation request, the coverage station may delete the physical cell identity of the capacity station from the intra-frequency black cell list of the system information block type4 message of the coverage station, and update system information.

If the coverage station and the capacity station are inter-frequency cells, after the time T3 after sending the first activation request, the coverage station may delete the physical cell identity of the capacity station from the inter-frequency black cell list of the system information block type5 message of the coverage station, and update system information.

306: When receiving the first activation request sent by the coverage station, the capacity station enters the normal state from the first energy saving state, specifically, sets a cell bearing parameter in the system information block type1 message as "bearing allowed" and update system information.

In this embodiment, in the first energy saving state, the capacity station may receive a paging message for a user equipment in an idle state delivered by a mobility management entity (Mobility Management Entity, MME), but does not send the paging message through an air interface.

If the capacity station and the coverage station are intra-frequency cells, the capacity station may deliver system information of the user equipment in a connected state, for example, a master information block (Master Information Block, MIB), system information blocks (System Information Blocks, SIBs) 1 to 4, but does not send other system information. If the capacity station and the coverage station are inter-frequency cells, the capacity station may deliver system information of the user equipment in a connected state, for example, a master information block, system information blocks 1 to 3 and a system information block 5, but does not send other system information.

In the first energy saving state, the capacity station normally sends other common signals, including a pilot signal and a synchronization signal; executes handover where a source base station is a present coverage station, and rejects all handover where the source base station is not the present coverage station.

In a second energy saving state, the capacity station sleeps or is turned off completely, and keeps an interface with the coverage station.

The energy saving method for a base station of the present invention is illustrated below through another specific embodiment:

In this embodiment, a coverage station and a capacity station are different radio access cells, for example, the coverage station is a UMTS terrestrial radio access network (Universal Terrestrial Radio Access Network, UTRAN) cell, whereas the capacity station is a EUTRAN cell. The coverage station provides basic network coverage, the capacity station is under the coverage of the coverage station and is completely covered by the coverage station.

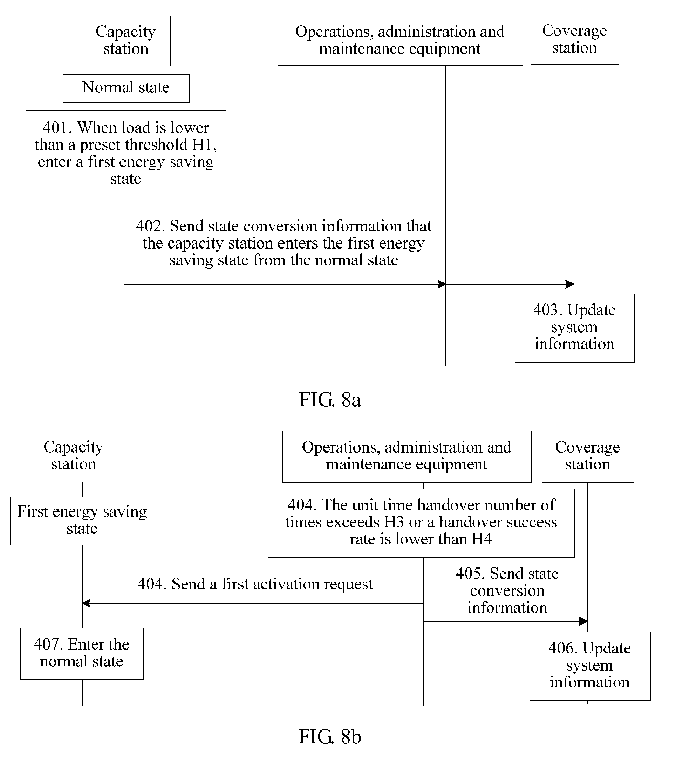

(1) Referring to FIG. 8a, a capacity station enters a first energy saving state from a normal state:

Whether the capacity station enters the first energy saving state from the normal state may be decided by the capacity station or may be decided by an OAM equipment.

401: When the capacity station is in the normal state, if it is detected that the load of the capacity station is lower than a preset threshold value H1, a cell bearing parameter in a system information block type1 message of the capacity station is set as "bearing barred", and after the time T1, the capacity station enters the first energy saving state from the normal state.

The detection of load at least includes one of the following factors: the number of users, which are in a connected state, of a capacity station, downlink data amount of a capacity station, an occupancy rate of air interface resources of a capacity station, and the like.

402. The capacity station notifies, through an OAM equipment, the coverage station of state conversion information of entering the first energy saving state from the normal state.

In this embodiment, the capacity station and the coverage station are different access network cells, so information between the capacity station and the coverage station needs to be transmitted through an OAM equipment.

403: After the coverage station receives the notification that the capacity station enters the first energy saving state from the normal state, the coverage station may add a physical cell identity of the capacity station to a black listed cells per frequency list (Black Listed cells per freq list) in a EUTRAN frequency and priority information list (EUTRAN Frequency and priority info list) of a system information block type19 message of the coverage station, and update system information.

(2) A capacity station enters a second energy saving state from a first energy saving state:

When the capacity station is in the first energy saving state, if there is no user equipment in a connected state within preset time T2, the capacity station enters the second energy saving state from the first energy saving state and notifies, through an OAM equipment, a coverage station of state conversion information of entering the second energy saving state from the first energy saving state.

(3) A capacity station enters a first energy saving state from a second energy saving state:

When the capacity station is in the second energy saving state, if an OAM equipment detects that the load of a present coverage station of the capacity station is higher than a preset threshold H2, the OAM equipment sends a second activation request to all or a part of capacity stations under the coverage to request the capacity stations to enter the first energy saving state; and notifies the coverage station of state conversion information that the capacity stations enter the first energy saving state from the second energy saving state.

When receiving the second activation request sent by the OAM equipment, a capacity station enters the first energy saving state from the second energy saving state.

(4) Referring to FIG. 8b, the capacity station enters a normal state from a first energy saving state:

404: When the capacity station is in the first energy saving state, if an OAM equipment detects that the unit time handover number of times when a user, which is in a connected state, of a coverage station takes the capacity station as a target base station exceeds a preset threshold H3, or a handover success rate for handover where the capacity station is a target base station is lower than a preset threshold H4, the OAM equipment sends a first activation request to the capacity station.

405: The OAM equipment sends state conversion information that the capacity station enters the normal state from the first state, to notify the coverage station.

406. The coverage station may delete the physical cell identity of the capacity station from cell items of each frequency list in a EUTRAN frequency and priority information list of a system information block type19 message of the coverage station, and update system information.

407. When receiving the first activation request sent by the OAM equipment, the capacity station enters the normal state from the first energy saving state, specifically, sets a cell bearing parameter in the system information block type1 message as "bearing allowed", and updates system information.

In this embodiment, in a first energy saving state, a capacity station may receive a paging message delivered by an MME for a user equipment in an idle state, but does not send the paging message through an air interface. The capacity station may deliver system information of the user equipment in a connected state, for example, a master information block, system information blocks 1 to 3 and a system information block 6, but does not send other system information; the capacity station normally sends other common signals, including a pilot signal and a synchronization signal; and executes handover where a source base station is the present coverage station, but rejects all handover where the source base station is not the present coverage station.

In a second energy saving state, the capacity station sleeps or is turned off completely, and keeps an interface with the OAM equipment.

It should be noted that, in other specific embodiments, if the coverage station is a global system for mobile communications (GSM) or an enhanced data rates for GSM evolution (EDGE) radio access network (Radio Access Network, GERAN) cell, and the capacity station is a EUTRAN cell, the energy saving method for a base station is similar to the foregoing energy saving method for a base station when the coverage station is a UTRAN cell and the capacity station is a EUTRAN cell, and the difference is:

When a capacity station is in a first energy saving state, the system information of a user equipment in a connected state delivered by the capacity station includes a master information block, system information blocks 1 to 3 and a system information block 7.

An embodiment of the present invention provides a base station:

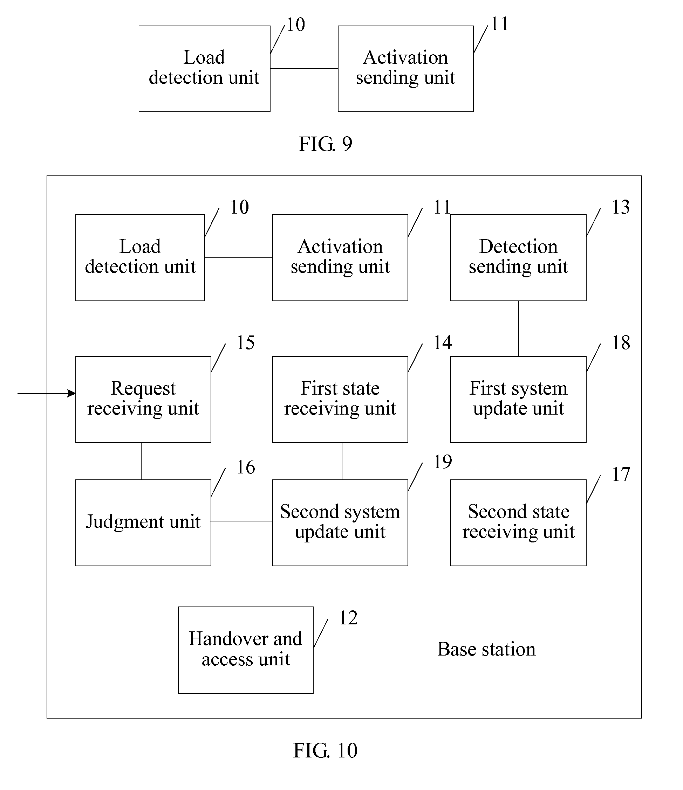

The base station in this embodiment may be the coverage station shown in FIGs. 1a and 1b, and the schematic structural view is shown in FIG. 9. The base station includes:
a load detection unit 10, configured to detect whether the load of a coverage station is higher than a preset value; where
during the detection of the load of the coverage station, the load detection unit 10 may detect one or more pieces of information in the following: the number of users, which are in a connected state, of a coverage station, downlink data amount of a coverage station, an occupancy rate of air interface resources of a coverage station, and the like; however, the present invention is not limited thereto; and
an activation sending unit 11, configured to, when the load detection unit 10 detects that the load of the coverage station is higher than the preset value, send a second activation request to a capacity station in a second energy saving state under the coverage of the coverage station, where the second activation request is used for requesting the capacity station to enter a first energy saving state from the second energy saving state.

The activation sending unit 11 may send the second activation request to all capacity stations under the coverage station to enter the first energy saving state; or may send the second activation request to a part of capacity stations under the coverage station, for example, this part of capacity stations may be capacity stations in an area where the distribution of user equipments and service amount is dense under the coverage station.

In the first energy saving state, the capacity station may only bear a user equipment in a connected state, and send system information required for a user equipment in a connected state, but does not send system information required for a user equipment in a disconnected state. The capacity station may further support handover where a source base station is a present coverage station of the capacity station, but reject handover where the source base station is not the present coverage station of the capacity station, and reject cell selection and cell reselection where the capacity station is a target; and the capacity station only sends a paging message used for notifying update of system information, but does not send a paging message used for paging a user equipment.

In a second energy saving state, namely, a sleep state or an off state, a capacity station rejects to bear a user equipment in any state, but the capacity station in the second energy saving state keeps an interface with a coverage station or an OAM equipment.

In the base station in this embodiment: if the load detection unit 10 detects that the load of the coverage station is higher than the preset value, the activation sending unit 11 sends a second activation request to all or a part of capacity stations in the second energy saving state under the coverage of the coverage station, so as to activate the capacity stations to enter a first energy saving state. Therefore, a capacity station in the first energy saving state only bears a user equipment in a connected state, whereas a user equipment in an idle state is borne by the coverage station, so that the overhead of common signaling that needs to be sent by the capacity station is reduced, thereby achieving the obj ect of energy saving for a capacity station.

In the embodiment of the present invention, the activation sending unit 11 of the base station activates the capacity stations from the second energy saving state, namely, the sleep or off state to the first energy saving state, so that a capacity station first does not bear a user equipment in an idle state. In this way, before it is completely determined whether the capacity station needs to return to a normal state, the moving of a user equipment in an idle state between a coverage station and the capacity station is avoided.

Referring to FIG. 10, in a specific embodiment, the base station in the embodiment of the present invention may include: a load detection unit 10, an activation sending unit 11, a handover and access unit 12, a detection sending unit 13, a first state receiving unit 14, a request receiving unit 15, a judgment unit 16, a second state receiving unit 17, a first system update unit 18 and a second system update unit 19.

The handover and access unit 12 is configured to, when the capacity station is in a first energy saving state, if a user equipment in a connected state under the coverage of a present coverage station of the capacity station performs handover where the capacity station is a target base station, hand over a packet switching service and/or circuit switching service to the capacity station; or is configured to, when the capacity station is in the first energy saving state, establish a connection with a user equipment in an idle state, and enable the user equipment to access the capacity station through the handover to the capacity station.

The detection sending unit 13 is configured to, if the capacity station is in the first energy saving state, when it is detected that the unit time handover number of times when the user equipment in a connected state under the coverage of the coverage station takes the capacity station as a target base station is higher than a preset value, or a handover success rate for handover where the capacity station is a target base station is lower than a preset value, send a first activation request to the capacity station; where the first activation request is used for requesting the capacity station to enter a normal state from the first energy saving state; and the capacity station in the normal state bears a user equipment in any state, and cell selection or cell reselection where the capacity station is a target base station is also allowed.

The first state receiving unit 14 is configured to receive state conversion information that the capacity station enters the first energy saving state from the normal state.

The request receiving unit 15 is configured to receive a request for entering the first energy saving state from the normal state, where the request is sent by the capacity station.

The judgment unit 16 is configured to, when the request receiving unit 15 receives the request for entering the first energy saving state from the normal state, if a network situation of the present coverage station of the capacity station meets a preset condition, send a forward judgment result to the capacity station; where the preset condition includes, but is not limited to, at least one piece of the following information: the current load of the coverage station is lower than a preset value, the load statistical information of the coverage station indicates that the load of the coverage station is lower than a preset value within subsequent preset time, load statistical information of the capacity station indicates that the load of the capacity station within subsequent preset time is lower than a preset value, and the like.

The second state receiving unit 17 is configured to receive state conversion information of entering the second energy saving state from the first energy saving state, where the state conversion information is sent by the capacity station.

The first system update unit 18 is configured to update a cell reselection parameter of the capacity station in a system message for the base station in this embodiment, so that an idle user equipment under the coverage of the coverage station is allowed to be reselected to the capacity station.

The second system update unit 19 is configured to update the cell reselection parameter of the capacity station in the system message for the base station in this embodiment, so that the idle user equipment under the coverage of the coverage station is prevented from being reselected to the capacity station.

In the base station in this embodiment, when the detection sending unit 13 decides that a capacity station in the first energy saving state enters the normal state, and sends the first activation request to the capacity station, the first system update unit 18 may update the system message of the coverage station.

When the capacity station decides to enter a first energy saving state from a normal state, notifies the coverage station of the state conversion information of entering the first energy saving state, and after the first state receiving unit 14 receives the state conversion information, the second system update unit 19 may update the system message of the coverage station.

In another case, when the capacity station needs to enter a first energy saving state from a normal state, sends a request for entering the first energy saving state from the normal state; after the request receiving unit 15 receives the request, the judgment unit 16 performs judgment, that is, when a network situation of the coverage station meets a preset condition, a forward judgment result is sent to the capacity station, and the second system update unit 19 may update the system message of the coverage station. It may be understood that, if the network situation of the coverage station does not meet the preset condition, the judgment unit 16 may further send a reverse judgment result to the capacity station and does not allow the capacity station to enter the first energy saving state from the normal state.

When the capacity station enters the second energy saving state from the first energy saving state, the second state receiving unit 17 of the coverage station is instructed to receive the state conversion information of entering the second energy saving state.

It may be understood that, when the capacity station is in the first energy saving state, if a user equipment in a connected state under the coverage station performs handover where the capacity station is a target base station, the handover and access unit 12 may hand over a packet switching service and/or a circuit switching service to the capacity station. When the capacity station is in the first energy saving state, if a user equipment in an idle state intends to access the capacity station, the handover and access unit 12 may first establish a connection with a user equipment in an idle state, so that the user equipment in an idle state becomes a user equipment in a connected state, and through the handover to the capacity station, the user equipment is connected to the capacity station in a first energy saving state.

The units in the base station may perform an energy saving operation for the base station according to the method shown in FIGs. 2 to 4, so that the capacity station may be converted between the normal state and the first energy saving state, and between the first energy saving state and the second energy saving state. After being activated from the second energy saving state, namely, a sleep state or an off state, the capacity station first does not bear a user equipment in an idle state. In this way, before it is completely determined whether the capacity station needs to return to a normal state, the moving of a user equipment in an idle state between a coverage station and the capacity station is avoided.

An embodiment of the present invention further provides an OAM equipment:

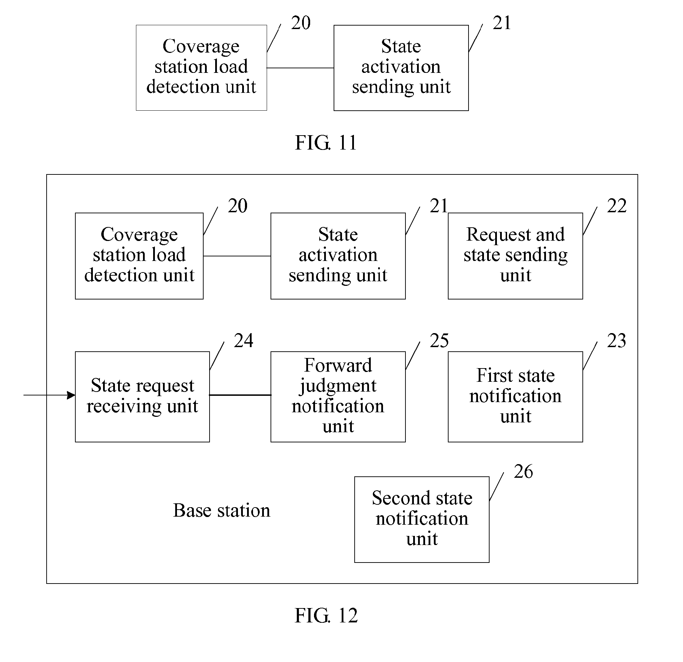

FIG. 11 is a schematic structural view, and the OAM equipment includes:
a coverage station load detection unit 20, configured to detect whether the load of a coverage station is higher than a preset value; where
during the detection of the load of the coverage station, the coverage station load detection unit 20 may detect one or more pieces of information in the following: the number of users, which are in a connected state, of a coverage station, downlink data amount of a coverage station, an occupancy rate of air interface resources of a coverage station, and the like; however, the present invention is not limited thereto; and
a state activation sending unit 21, configured to, when the coverage station load detection unit 20 detects that the load of the coverage station is higher than the preset value, send a second activation request to a capacity station in a second energy saving state under the coverage of the coverage station, and notify the coverage station of state conversion information that the capacity station enters a first energy saving state from the second energy saving state, where the second activation request is used for requesting the capacity station to enter the first energy saving state from the second energy saving state.

The state activation sending unit 21 may send the second activation request to all capacity stations under the coverage station to enter the first energy saving state; or may send the second activation request to a part of capacity stations under the coverage station, for example, the part of capacity stations may be capacity stations in an area where the distribution of user equipments and service amount is dense under the coverage station.

In the first energy saving state, the capacity station may only bear a user equipment in a connected state, and send system information required for a user equipment in a connected state, but does not send system information required for a user equipment in a disconnected state. The capacity station may further support handover where a source base station is a present coverage station of the capacity station, but reject handover where the source base station is not the present coverage station of the capacity station, and reject cell selection and cell reselection where the capacity station is a target; and the capacity station only sends a paging message used for notifying update of system information, but does not send a paging message used for paging a user equipment.

In a second energy saving state, namely, a sleep state or an off state, a capacity station rejects to bear a user equipment in any state, but the capacity station in the second energy saving state keeps an interface with a coverage station or an OAM equipment.

In the base station in this embodiment, if the coverage station load detection unit 20 detects that the load of the coverage station is higher than the preset value, the state activation sending unit 21 sends the second activation request to all or a part of capacity stations in the second energy saving state under the coverage of the coverage station, so as to activate the capacity stations to enter a first energy saving state. Therefore, a capacity station in the first energy saving state only bears a user equipment in a connected state, whereas a user equipment in an idle state is borne by the coverage station, so that the overhead of common signaling that needs to be sent by the capacity station is reduced, thereby achieving the object of energy saving for a capacity station.

Referring to FIG. 12, in a specific embodiment, a base station in an embodiment of the present invention may include: a coverage station load detection unit 20, a state activation sending unit 21, a request and state sending unit 22, a first state notification unit 23, a state request receiving unit 24, a forward judgment notification unit 25 and a second state notification unit 26.

The request and state sending unit 22 is configured to, when a capacity station is in a first energy saving state, if it is detected that the unit time handover number of times when a user equipment in a connected state under the coverage of the present coverage station of the capacity station takes the capacity station as a target base station is higher than a preset value, or a handover success rate for handover where the capacity station is a target base station is lower than a preset value, send a first activation request to the capacity station, and notify the coverage station of state conversion information that the capacity station enters a normal state from the first energy saving state; where the first activation request is used for requesting the capacity station to enter the normal state from the first energy saving state, the capacity station in the normal state bears a user equipment in any state, and cell selection or cell reselection where the capacity station is a target base station is also allowed.

The first state notification unit 23 is configured to receive the state conversion information that the capacity station enters the first energy saving state from the normal state, and notify the coverage station.

The state request receiving unit 24 is configured to receive a request for entering the first energy saving state from the normal state, where the request is sent by the capacity station.

The forward judgment notification unit 25 is configured to, after the state request receiving unit 24 receives the request for entering the first energy saving state from the normal state, if a network situation of the present coverage station of the capacity station meets a preset condition, send a forward judgment result to the capacity station, and notify the coverage station of state conversion information that the capacity station enters the first energy saving state from the normal state; where the preset condition includes at least one piece of the following information: the current load of the coverage station is lower than a preset value, the load statistical information of the coverage station indicates that the load of the coverage station is lower than a preset value within subsequent preset time, the load statistical information of the capacity station indicates that the load of the capacity station is lower than a preset value within subsequent preset time, and the like.

The second state notification unit 26 is configured to receive the state conversion information of entering the second energy saving state from the first energy saving state and notify the coverage station, where the state conversion information is sent by the capacity station.

In the OAM equipment in this embodiment: when deciding that the capacity station enters the normal state from a first energy saving state, the request and state sending unit 22 sends the first activation request to the capacity station, and notifies the coverage station of the state conversion information that the capacity station enters the normal state from the first energy saving state.

When deciding to enter a first energy saving state from the normal state, the capacity station sends the state conversion information of entering the first energy saving state to the OAM equipment, so that the first state notification unit 23 notifies the coverage station of the received state conversion information.

In another case, the capacity station needs to enter a first energy saving state from a normal state, a request for entering the first energy saving state from the normal state is sent, after the state request receiving unit 24 receives the request, the forward judgment notification unit 25 performs judgment, that is, when a network situation of the present coverage station of the capacity station meets a preset condition, a forward judgment result is sent to the capacity station, and the coverage station is notified of state conversion information that the capacity station enters the first energy saving state from the normal state. It may be understood that, if the network situation of the present coverage station of the capacity station does not meet a preset condition, a reverse judgment result is sent to the capacity station, so that the capacity station keeps in the original normal state.

When the capacity station enters a second energy saving state from a first energy saving state, the state conversion information of entering the second energy saving state is sent to the OAM equipment, and the second state notification unit 17 notifies the coverage station of the received state conversion information.

Through the cooperation of all units in the foregoing OAM equipment, the capacity station may be converted between the normal state and the first energy saving state, and between the first energy saving state and the second energy saving state, so that after being activated from the second energy saving state, namely, a sleep state or an off state, the capacity station first does not bear a user equipment in an idle state. In this way, before it is completely determined whether the capacity station needs to return to a normal state, the moving of a user equipment in an idle state between a coverage station and the capacity station is avoided.

An embodiment of the present invention further provide another base station:

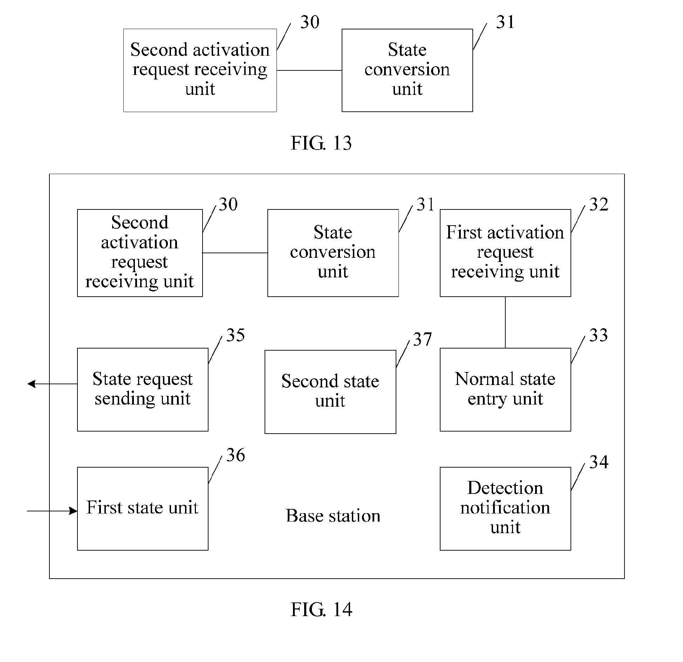

The base station may in this embodiment may be the capacity stations shown in FIGs. 1a and 1b, the schematic structural view is shown in FIG. 13, and the base station includes:
a second activation request receiving unit 30, configured to receive a second activation request sent by a present coverage station of a capacity station or an operations, administration and maintenance OAM equipment, where the second activation request is used for requesting the capacity station to enter a first energy saving state from a second energy saving state; and
a state conversion unit 31, configured to, after the second activation request receiving unit 30 receives the second activation request, enter the first energy saving state from the current second energy saving state.

In the first energy saving state, the capacity station only bears a user equipment in a connected state, and sends system information required for a user equipment in a connected state, but does not send system information required for a user equipment in a disconnected state. The capacity station may further support handover where a source base station is the present coverage station of the capacity station, but reject handover where the source base station is not the present coverage station of the capacity station, and reject cell selection and cell reselection where the capacity station is a target; and the capacity station only sends a paging message used for notifying update of system information, but does not send a paging message used for paging a user equipment.

In the second energy saving state, namely, a sleep state or an off state, a capacity station rejects to bear a user equipment in any state, but the capacity station in the second energy saving state keeps an interface with a coverage station or an OAM equipment.

In the base station in the embodiment of the present invention: when the second activation request receiving unit 30 receives the second activation request sent by the coverage station or OAM equipment, the state conversion unit 31 enters the first energy saving state from the current second energy saving state. Therefore, the capacity station in the first energy saving state only bears a user equipment in a connected state, whereas a user equipment in an idle state is borne by the coverage station, so that the overhead of common signaling that needs to be sent by the capacity station is reduced, thereby achieving the object of energy saving for a capacity station.

In the capacity station in the embodiment of the present invention, after being activated from the first energy saving state, that is, the sleep or off state, the state conversion unit 31 first does not bear a user equipment in an idle state. In this way, before it is completely determined whether the capacity station needs to return to a normal state, the moving of a user equipment in an idle state between a coverage station and the capacity station is avoided.

Referring to FIG. 14, in another specific embodiment, a base station of this embodiment may include: a second activation request receiving unit 30, a state conversion unit 31, a first activation request receiving unit 32, a normal state entry unit 33, a detection notification unit 34, a state request sending unit 35, a first state unit 36 and a second state unit 37.

The first activation request receiving unit 32 is configured to receive a first activation request sent by a coverage station or an operations, administration and maintenance OAM equipment, where the first activation request is used for requesting the capacity station to enter a normal state from a first energy saving state; where the capacity station in the normal state bears a user equipment in any state, and operations such as cell selection or cell reselection where the capacity station is a target base station are also allowed.

The normal state entry unit 33 is configured to, after the first activation request receiving unit 32 receives the first activation request, enter the normal state from the current first energy saving state.

The normal state entry unit 33 may update a parameter of cell access in a system message, so that a user equipment in an idle state under the coverage of the capacity station resides in the capacity station, and a user equipment under the coverage of the capacity station is allowed to perform cell selection and cell reselection where the capacity station is a target base station.

The detection notification unit 34 is configured to detect whether the load of the capacity station is lower than a preset value, if yes, enter the first energy saving state from the current normal state, and notify the present coverage station of the capacity station of the conversion information that the capacity station enters the first energy saving state from the normal state.

During the detection of the load of a capacity station, the detection notification unit 34 may detect one or more pieces of information in the following: the number of users, which are in a connected state, of a capacity station, downlink data amount of a capacity station, an occupancy rate of air interface resources of a capacity station; however, the present invention is not limited thereto.

The state request sending unit 35 is configured to detect whether the load of the capacity station is lower than a preset value, and if yes, send a request for entering the first energy saving state from the normal state to the coverage station or an OAM equipment.

The first state unit 36 is configured to, when a forward judgment result which is fed back by the coverage station or OAM equipment according to the request for entering the first energy saving state from the normal state is received, enter the first energy saving state from the current normal state.

Specifically, the first state unit 36 may migrate a user equipment in an idle state under the coverage of the capacity station, and update a parameter of cell access in a system message, so that a user equipment under the coverage of the capacity station is prevented from performing cell selection and cell reselection where the capacity station is a target base station.

The second state unit 37 is configured to, when it is detected the capacity station has no user equipment in a connected state within preset time, enter the second energy saving state from the current first energy saving state, and notify the present coverage station of the capacity station of state conversion information that the capacity station enters the second energy saving state from the first energy saving state.

In the base station in this embodiment, when the first activation request receiving unit 32 receives the first activation request sent by the coverage station or the OAM equipment, the normal state entry unit 33 enters the normal state from the current first energy saving state.

The capacity station decides, through the detection notification unit 34, to enter the first energy saving state from the normal state, and notifies the present coverage station of the capacity station of the state conversion information of entering the first energy saving state.

In another case, the state request sending unit 35 of the capacity station enters a first energy saving state from a normal state, so that a request for entering the first energy saving state from the normal state is sent, after receiving the forward judgment result sent by the coverage station or OAM equipment, the first state unit 36 enters the first energy saving state from the normal state; and when receiving the reverse judgment result sent by the coverage station or OAM equipment, the first state unit 36 keeps in the original normal state.

When deciding to enter the second energy saving state from the first energy saving state, the second state unit 37 notifies the present coverage station of the capacity station of the state conversion information of entering the second energy saving state.

Through the cooperation of all units in the capacity station, the capacity station may be converted from the normal state and the first energy saving state, and between the first energy saving state and the second energy saving state, so that after being activated from the second energy saving state, namely, a sleep state or an off state, the capacity station first does not bear a user equipment in an idle state. In this way, before it is completely determined whether the capacity station needs to return to a normal state, the moving of a user equipment in an idle state between a coverage station and the capacity station is avoided.

An embodiment of the present invention further provides an energy saving system for a base station, which includes: a coverage station and at least one capacity station under the coverage of the coverage station, and the coverage station and the capacity station in the system in this embodiment are network cells belonging to the same radio access technologies.

The coverage station is configured to detect whether the load of the coverage station is higher than a preset value, and if yes, send a second activation request to all or a part of capacity stations in a second energy saving state under the coverage of the coverage station, where the second activation request is used for requesting the capacity stations to enter a first energy saving state from the second energy saving state; in the first energy saving state, a capacity station only bears a user equipment in a connected state, and sends system information required for the user equipment in a connected state; and in the second energy saving state, the capacity station rejects to bear a user equipment in any state.

The capacity station is configured to receive the second activation request sent by the coverage station and enter the first energy saving state from the current second energy saving state.

An embodiment of the present invention provides another energy saving system for a base station, which includes: a coverage station, at least one capacity station under the coverage of the coverage station and an operations, administration and maintenance OAM equipment, and in the system in this embodiment, the coverage station and the capacity station are network cells belonging to different radio access technologies.

The OAM equipment is configured to detect whether the load of a coverage station is higher than a preset value, if yes, send a second activation request to all or a part of capacity stations in a second energy saving state under the coverage of the coverage station, where the second activation request is used for requesting the capacity stations to enter a first energy saving state from the second energy saving state, and notify the coverage station of state conversion information that a capacity station enters the first energy saving state from the second energy saving state; where in the first energy saving state, the capacity station only bears a user equipment in a connected state, and sends system information required for the user equipment in a connected state; and in the second energy saving state, the capacity station rejects to bear a user equipment in any state.

The capacity station is configured to receive the second activation request sent by the OAM equipment and enter the first energy saving state from the current second energy saving state.

The coverage station is configured to receive state conversion information that the capacity station enters the first energy saving state from the second energy saving state, where the state conversion information is sent by the OAM equipment.

In conclusion, the method in the embodiments of the present invention implements energy saving for a base station in the following manners:

(1) When a capacity station meets a certain condition, the capacity station only bears a user equipment in a connected state, and a user equipment in an idle state is borne by a coverage station, so as to further make full use of common signaling sent continuously by the coverage station to maintain basic network coverage, reduce the overhead of common signaling for a user equipment, which is in an idle state, of the capacity station, thereby further effectively utilizing a network topology where a coverage station and a capacity station coexist and wireless resources, so as to achieve the object of energy saving for a capacity station.

(2) After being activated from a second energy saving state, namely, a sleep state or an off state, a capacity station first does not bear a user equipment in an idle state, and only bears a user equipment in a connected state. In this way, before it is completely determined whether the capacity station needs to return to a normal state, the moving of a user equipment in an idle state between a coverage station and the capacity station as well as possible location updates is avoided.

Persons of ordinary skill in the art may understand that all or part of the steps of the methods in the above embodiments may be implemented by a computer program instructing relevant hardware. The program may be stored in a computer readable storage medium. The storage medium may include a ROM, a RAM, a magnetic disk, or an optical disk.

The energy saving method, system and device for a base station provided in the embodiments of the present invention are described in detail above. The principle and implementation of the present invention are described herein through specific examples. The description about the embodiments of the present invention is merely provided for ease of understanding of the method and core idea of the present invention. Persons of ordinary skill in the art can make variations and modifications to the present invention in terms of the specific implementation and application scope according to the idea of the present invention. Therefore, the content of the specification shall not be construed as a limit to the present invention.

## Claims

1. An energy saving method for a base station, comprising:
detecting whether load of a coverage station is higher than a preset value; and
if the load of the coverage station is higher than the preset value, sending a second activation request to a capacity station in a second energy saving state under coverage of the coverage station, wherein the second activation request is used for requesting the capacity station to enter a first energy saving state from the second energy saving state; wherein,
in the first energy saving state, the capacity station only bears a user equipment in a connected state and sends system information of the user equipment in a connected state; and in the second energy saving state, the capacity station rejects to bear a user equipment in any state.

2. The method according to claim 1, wherein in the first energy saving state, the capacity station further rejects handover where a source base station is not a present coverage station of the capacity station, rejects cell selection and cell reselection where the capacity station is a target, and only sends a paging message used for notifying update of system information.

3. The method according to claim 1, wherein if an operations, administration and maintenance OAM equipment performs the detection of the load and sends the second activation request, the method further comprises: notifying, by the OAM equipment, the coverage station of state conversion information that the capacity station enters the first energy saving state from the second energy saving state.

4. The method according to claim 1, wherein when the capacity station is in the first energy saving state, the method further comprises:
if the user equipment in a connected state performs handover where the capacity station is a target base station, handing over at least one service of a packet switching service and a circuit switching service to the capacity station;
or, the method further comprises: establishing a connection with a user equipment in an idle state, and enabling the user equipment to access the capacity station through handover to the capacity station.

5. The method according to claim 1, further comprising:
when it is detected that the unit time handover number of times when the user equipment in a connected state under the coverage of the coverage station takes the capacity station as a target base station is higher than a preset value, or a handover success rate for handover where the capacity station is a target base station is lower than a preset value, sending a first activation request to the capacity station; wherein,
the first activation request is used for requesting the capacity station to enter a normal state from the first energy saving state; and the capacity station in the normal state bears a user equipment in any state.

6. The method according to claim 5, wherein if an operations, administration and maintenance OAM equipment performs the detection of the unit time handover number of times or the handover success rate, after the OAM equipment sends the first activation request, the method further comprises: notifying, by the OAM equipment, the coverage station of state conversion information that the capacity station enters the normal state from the first energy saving state.

7. The method according to claim 5, wherein after it is detected that the unit time handover number of times when the user equipment in a connected state under the coverage of the coverage station takes the capacity station as a target base station is higher than the preset value, or the handover success rate for the handover where the capacity station is a target base station is lower than the preset value, the method further comprises:
updating a cell reselection parameter of the capacity station in a system message of the coverage station, so that an idle user equipment under the coverage of the coverage station is allowed to be reselected to the capacity station.

8. The method according to any one of claims 5 to 7, further comprising:
receiving state conversion information that the capacity station enters the first energy saving state from the normal state; and
updating the cell reselection parameter of the capacity station in the system message, so that the idle user equipment under the coverage of the coverage station is prevented from being reselected to the capacity station.

9. The method according to any one of claims 5 to 7, further comprising:
receiving a request for entering the first energy saving state from the normal state, wherein the request is sent by the capacity station; and
if a network situation of the coverage station meets a preset condition, sending a forward judgment result to the capacity station; wherein,
the preset condition comprises at least one piece of the following information: current load of the coverage station is lower than a preset value, load statistical information of the coverage station indicates that load of the coverage station is lower than a preset value within subsequent preset time, load statistical information of the capacity station indicates that load of the capacity station is lower than a preset value within subsequent preset time;
if the operations, administration and maintenance OAM equipment receives the request for entering the first energy saving state from the normal state and sends the forward judgment result, the method further comprises: notifying, by the OAM equipment, the coverage station of state conversion information that the capacity station enters the first energy saving state from the normal state.

10. The method according to claim 9, further comprising:
updating the cell reselection parameter of the capacity station in the system message of the coverage station, so that the idle user equipment under the coverage of the coverage station is prevented from being reselected to the capacity station.

11. The method according to claim 9, further comprising:
receiving state conversion information of entering the second energy saving state from the first energy saving state, wherein the state conversion information is sent by the capacity station; and
if the operations, administration and maintenance OAM equipment receives the state conversion information of entering the second energy saving state from the first energy saving state, the method further comprises: notifying, by the OAM equipment, the coverage station of the state conversion information that the capacity station enters the second energy saving state from the first energy saving state.

12. An energy saving method for a base station, comprising:
receiving a second activation request sent by a present coverage station or an operations, administration and maintenance OAM equipment, wherein the second activation request is used for requesting a capacity station to enter a first energy saving state from a second energy saving state; and
entering the first energy saving state from the current second energy saving state; wherein,
in the first energy saving state, the capacity station only bears a user equipment in a connected state and sends system information of the user equipment in a connected state; and in the second energy saving state, the capacity station rejects to bear a user equipment in any state.

13. The method according to claim 12, wherein in the first energy saving state, the capacity station further rejects handover where a source base station is not the present coverage station of the capacity station, rejects cell selection and cell reselection where the capacity station is a target, and only sends a paging message used for notifying update of system information.

14. The method according to claim 12, further comprising:
receiving a first activation request sent by the coverage station or the operations, administration and maintenance OAM equipment, wherein the first activation request is used for requesting the capacity station to enter a normal state from the first energy saving state; and the capacity station in the normal state bears a user equipment in any state; and
entering the normal state from the current first energy saving state.

15. The method according to claim 14, wherein the entering the normal state from the current first energy saving state specifically comprises:
updating a parameter of cell access in a system message, so that a user equipment in an idle state under coverage of the capacity station resides in the capacity station, and a user equipment under the coverage of the capacity station is allowed to perform cell selection and cell reselection where the capacity station is a target base station.

16. The method according to claim 14, further comprising:
detecting whether load of the capacity station is lower than a preset value, if yes, entering the first energy saving state from the current normal state, and notifying the present coverage station of the capacity station of conversion information that the capacity station enters the first energy saving state from the normal state.

17. The method according to claim 14, further comprising:
detecting whether load of the capacity station is lower than a preset value, if yes, sending a request for entering the first energy saving state from the normal state to the coverage station or OAM equipment;
when a forward judgment result which is fed back by the coverage station or OAM equipment according to the request for entering the first energy saving state from the normal state is received, entering the first energy saving state from the current normal state.

18. The method according to claim 16 or 17, wherein the entering the first energy saving state from the current normal state specifically comprises:
migrating a user equipment in an idle state under the coverage of the capacity station, and updating a parameter of cell access in a system message, so that the user equipment under the coverage of the capacity station is prevented from performing cell selection and cell reselection where the capacity station is a target base station.

19. The method according to claim 16 or 17, further comprising:
if it is detected that the capacity station has no user equipment in a connected state within preset time, entering the second energy saving state from the current first energy saving state, and notifying the coverage station of state conversion information that the capacity station enters the second energy saving state from the first energy saving state.

20. A base station, comprising:
a load detection unit, configured to detect whether load of a coverage station is higher than a preset value; and
an activation sending unit, configured to, when the load detection unit detects that the load of the coverage station is higher than the preset value, send a second activation request to a capacity station in a second energy saving state under coverage of the coverage station, where the second activation request is used for requesting the capacity station to enter a first energy saving state from the second energy saving state; wherein,
in the first energy saving state, the capacity station only bears a user equipment in a connected state and sends system information of the user equipment in a connected state; and in the second energy saving state, the capacity station does not bear a user equipment in any state.

21. The base station according to claim 20, further comprising:
a handover and access unit, configured to, when the capacity station is in the first energy saving state, if the user equipment in a connected state under the coverage of the coverage station performs handover where the capacity station is a target base station, hand over a packet switching service and/or a circuit switching service to the capacity station; or, configured to, when the capacity station is in the first energy saving state, establish a connection with a user equipment in an idle state, and enable the user equipment to access the capacity station through handover to the capacity station.

22. The base station according to claim 20, further comprising:
a detection sending unit, configured to, when it is detected that the unit time handover number of times when the user equipment in a connected state under the coverage of the coverage station takes the capacity station as a target base station is higher than a preset value, or a handover success rate for handover where the capacity station is a target base station is lower than a preset value, send a first activation request to the capacity station; wherein the first activation request is used for requesting the capacity station to enter a normal state from the first energy saving state; and the capacity station in the normal state bears a user equipment in any state.

23. The base station according to claim 22, further comprising:
a first system update unit, configured to update a cell reselection parameter of the capacity station in a system message of the base station, so that an idle user equipment under the coverage of the coverage station is allowed to be reselected to the capacity station.

24. The base station according to claim 22, further comprising:
a first state receiving unit, configured to receive state conversion information that the capacity station enters the first energy saving state from the normal state; and
a second system update unit, configured to update a cell reselection parameter of the capacity station in a system message of the base station, so that an idle user equipment under the coverage of the coverage station is prevented from being reselected to the capacity station.

25. The base station according to claim 22, further comprising:
a request receiving unit, configured to receive a request for entering the first energy saving state from the normal state, wherein the request is sent by the capacity station; and
a judgment unit, configured to, when a network situation of the coverage station meets a preset condition, send a forward judgment result to the capacity station; wherein the preset condition comprises at least one piece of the following information: current load of the coverage station is lower than a preset value, load statistical information of the coverage station indicates that load of the coverage station is lower than a preset value within subsequent preset time, load statistical information of the capacity station indicates that load of the capacity station is lower than a preset value within subsequent preset time.

26. The base station according to claim 24 or 25, further comprising:
a second state receiving unit, configured to receive state conversion information of entering the second energy saving state from the first energy saving state, wherein the state conversion information is sent by the capacity station.

27. An operations, administration and maintenance OAM equipment, comprising:
a coverage station load detection unit, configured to detect whether load of a coverage station is higher than a preset value; and
a state activation sending unit, configured to, when the coverage station load detection unit detects that the load of the coverage station is higher than the preset value, send a second activation request to a capacity station in a second energy saving state under coverage of the coverage station, and notify the coverage station of state conversion information that the capacity station enters a first energy saving state from the second energy saving state, wherein the second activation request is used for requesting the capacity station to enter the first energy saving state from the second energy saving state; wherein,
in the first energy saving state, the capacity station only bears a user equipment in a connected state and sends system information of the user equipment in a connected state; and in the second energy saving state, the capacity station does not bear a user equipment in any state.

28. The equipment according to claim 27, further comprising:
a request and state sending unit, configured to, when it is detected that the unit time handover number of times when the user equipment in a connected state under the coverage of the coverage station takes the capacity station as a target base station is higher than a preset value, or a handover success rate for handover where the capacity station is a target base station is lower than a preset value, send a first activation request to the capacity station, and notify the coverage station of state conversion information that the capacity station enters a normal state from the first energy saving state; wherein,
the first activation request is used for requesting the capacity station to enter the normal state from the first energy saving state, and the capacity station in the normal state bears a user equipment in any state.

29. The equipment according to claim 28, further comprising:
a first state notification unit, configured to receive state conversion information that the capacity station enters the first energy saving state from the normal state and notify the coverage station.

30. The equipment according to claim 28, further comprising:
a state request receiving unit, configured to receive a request for entering the first energy saving state from the normal state, wherein the request is sent by the capacity station; and
a forward judgment notification unit, configured to, when a network situation of the coverage station meets a preset condition, send a forward judgment result to the capacity station, and notify the coverage station of state conversion information that the capacity station enters the first energy saving state from the normal state; wherein the preset condition comprises at least one piece of the following information: current load of the coverage station is lower than a preset value, load statistical information of the coverage station indicates that load of the coverage station is lower than a preset value within subsequent preset time, load statistical information of the capacity station indicates that load of the capacity station is lower than a preset value within subsequent preset time.

31. The equipment according to claim 29 or 30, further comprising:
a second state notification unit, configured to receive state conversion information of entering the second energy saving state from the first energy saving state and notify the coverage station, wherein the state conversion information is sent by the capacity station.

32. A base station, comprising:
a second activation request receiving unit, configured to receive a second activation request sent by a present coverage station or an operations, administration and maintenance OAM equipment, wherein the second activation request is used for requesting a capacity station to enter a first energy saving state from a second energy saving state; and
a state conversion unit, configured to, after the second activation request receiving unit receives the second activation request, enter the first energy saving state from the current second energy saving state; wherein,
in the first energy saving state, the capacity station only bears a user equipment in a connected state and sends system information of the user equipment in a connected state; and in the second energy saving state, the capacity station rejects to bear a user equipment in any state.

33. The base station according to claim 32, further comprising:
a first activation request receiving unit, configured to receive a first activation request sent by the coverage station or the operations, administration and maintenance OAM equipment, wherein the first activation request is used for requesting the capacity station to enter a normal state from the first energy saving state; and the capacity station in the normal state bears a user equipment in any state; and
a normal state entry unit, configured to, after the first activation request receiving unit receives the first activation request, enter the normal state from the current first energy saving state.

34. The base station according to claim 33, further comprising:
a detection notification unit, configured to detect whether load of the capacity station is lower than a preset value, if yes, enter the first energy saving state from the current normal state, and notify the present coverage station of the capacity station of conversion information that the capacity station enters the first energy saving state from the normal state.

35. The base station according to claim 33, further comprising:
a state request sending unit, configured to detect whether load of the capacity station is lower than a preset value, and if yes, send a request for entering the first energy saving state from the normal state to the coverage station or OAM equipment; and
a first state unit, configured to, when a forward judgment result which is fed back by the coverage station or OAM equipment according to the request for entering the first energy saving state from the normal state is received, enter the first energy saving state from the current normal state.

36. The base station according to claim 34 or 35, further comprising:
a second state unit, configured to, when it is detected that the capacity station has no user equipment in a connected state within preset time, enter the second energy saving state from the current first energy saving state, and notify the coverage station of state conversion information that the capacity station enters the second energy saving state from the first energy saving state.

37. An energy saving system for a base station, comprising: a coverage station and at least one capacity station under coverage of the coverage station; wherein,
the coverage station is configured to detect whether load of the coverage station is higher than a preset value, and if yes, send a second activation request to a capacity station in a second energy saving state under the coverage of the coverage station, wherein the second activation request is used for requesting the capacity station to enter a first energy saving state from the second energy saving state; in the first energy saving state, the capacity station only bears a user equipment in a connected state and sends system information of the user equipment in a connected state; and in the second energy saving state, the capacity station rej ects to bear a user equipment in any state; and
the capacity station is configured to receive the second activation request sent by the coverage station and enter the first energy saving state from the current second energy saving state.

38. An energy saving system for a base station, comprising: a coverage station, at least one capacity station under coverage of the coverage station and an operations, administration and maintenance OAM equipment; wherein,
the OAM equipment is configured to detect whether load of the coverage station is higher than a preset value, and if yes, send a second activation request to a capacity station in a second energy saving state under the coverage of the coverage station, wherein the second activation request is used for requesting the capacity station to enter a first energy saving state from the second energy saving state, and notify the coverage station of state conversion information that the capacity station enters the first energy saving state from the second energy saving state; in the first energy saving state, the capacity station only bears a user equipment in a connected state and sends system information of the user equipment in a connected state; and in the second energy saving state, the capacity station rejects to bear a user equipment in any state;
the capacity station is configured to receive the second activation request sent by the OAM equipment and enter the first energy saving state from the current second energy saving state; and
the coverage station is configured to receive state conversion information that the capacity station enters the first energy saving state from the second energy saving state, wherein the state conversion information is sent by the OAM equipment.
